# EUROPEAN PATENT APPLICATION

(11) **EP 2 871 790 A1**
(43) Date of publication of application: **13.05.2015**
(21) Application number: 13306538.3
(22) Date of filing: 12.11.2013
(51) Int. Cl.: H04J 14/02, H04L 12/24

(54) **Cost-optimized controller architecture for network elements**

(71) Applicant: ALCATEL LUCENT, 92100 Boulogne-Billancourt (FR)
(72) Inventor: Loehr, Jürgen, 70435 Stuttgart (DE)
(74) Representative: MERH-IP Matias Erny Reichl Hoffmann

(57) **Abstract**

An optical module for a network element providing at least one network element function, comprises:
an optical interface for receiving control commands for controlling operation of the network element over an optical communication link,
a network element interface for communication with the network element function, and
a control unit configured to control the at least one network element function provided by the network element via the network element interface.

## Description

### Background

This document relates to an optical module for a network element providing at least one network element function.

In known network elements, which may comprise equipment used in the provisioning of a telecommunications service, a separate network element controller is provided, which is e.g. a processor with RAM, memory and 10. Such a separate controller, together with its interfaces and connectors, increases the cost and complexity of the network element.

There is thus a need to provide a cost-optimized network element, wherein the number of hardware components can be reduced.

### Summary

According to an aspect, an optical module for a network element providing at least one network element function comprises an optical interface for receiving control commands for controlling operation of the network element over an optical communication link. The optical module may transmit control feedback data over the optical communication link. Therein, the optical interface may be similar or even identical to the optical interface of an optical transceiver element for receiving data. The optical module further comprises a network element interface for communication with the network element function. The network element interface may be implemented by e.g. an I²C interface and/or may comprise further components. The optical element also comprises a control unit configured to control the at least one network element function provided by the network element via the network element interface. The control unit may comprise e.g. a processor or a FPGA (field programmable gate array). Thus, the optical module may handle communications via the optical interface for receiving control commands and optionally providing control feedback to an external entity, while controlling the at least one network functionality of the network element without the need for a separate piece of controller hardware. Hence, the network element may have a comparatively simple structure without a separate control processor being provided e.g. on the motherboard or the backplane of the network element.

According to embodiments, the network element interface may comprise a bus interface for communication between the optical module and the network element function. The network element interface may connect to a motherboard of the network element. In particular, the bus interface may be configured according to I²C, SPI or SMBus or any other suitable standard. Thus, standardized interfaces may be used for communication within the network element and for controlling operation of the network element function, so that the optical module may replace a prior art controller without the need for any adjustments of any other network element components. Alternatively, instead of a bus any other suitable interface can be used as the network element interface.

According to embodiments, the network element interface may comprise ports for receiving and transmitting of control data for controlling the at least one network element function. Therein, the network element may receive control commands from an external management entity and may process the control commands in order to generate control data for controlling the at least one network element function. The ports for receiving and transmitting of control data may be similar or identical to the ports used as differential receiver output ports in an optical transceiver module, or these ports may be similar or identical to the control ports used for controlling the operation of an optical transceiver module in a network element.

According to embodiments, the optical interface may comprise means for terminating the optical communication link. Thus, control commands can be received from an external management entity, and feedback may be provided, wherein the optical communication protocol terminates at the optical module. According to embodiments, the control unit may receive control commands and may send responses via the optical interface and the optical communication link. Thus, an external management entity may control the operation of the control unit and the network element and receive feedback regarding the operation of the network element via the optical communication link. Therein, the configuration of the network element may be controlled and adjusted according to the control commands received from the external management entity, and diagnostic information regarding the function and state of the network element may be provided to the external management entity.

According to embodiments, the control unit may be configured to process control commands according to a network management protocol, in particular SNMP, CLI or TL1. Thus, standardized telecommunication network management protocols may be used for controlling the network element.

According to embodiments, the optical module may further comprise an optical transceiver connectable to the optical communication link using a single-mode or multi-mode fibre, in particular according to one of the following standards: SDH/SONET, Ethernet, Fibre Channel. Thus, the optical module may be employed as an optical transceiver in addition to being configurable as a network element controller.

Therein, the optical module may further comprise a configurable switch, wherein, at a first switch setting, control commands received over the optical communication link are provided to the control unit, and, at a second switch setting, optical signals received over the optical communication link are converted into electrical signals and are transmitted via a data interface of the optical module to the network element. Thus, by changing the switch setting, the optical module may be switched between an optical transceiver mode and a network controller mode. The switch configuration may be changed by software instructions, which may e.g. be stored in the memory of the optical module or which may be received via an optical or electrical communication interface. Further, the switch configuration may be changed manually by a user, e.g. by operating a physical switch located on a surface of the optical module.

According to embodiments, the optical communication link may be configured to receive an optical network management signal, in particular via an optical supervisory channel or as an Ethernet signal. Thus, the optical module may be integrated into an existing architecture wherein an optical supervisory channel or an Ethernet connection is used for controlling operation of the network element.

According to embodiments, the optical module may be implemented using a standardized form factor, in particular it may be configured as a small form factor pluggable (SFP), enhanced small form factor pluggable (SFP+), quad small form factor pluggable (QSFP), or as a 10 Gigabit small form factor pluggable (XFP) module. Thus, existing slots of the network element may be used for installing the optical module. The optical module may replace a standard optical transceiver, wherein the optical module may provide the network element control in addition to or instead of optical transceiver functions.

According to embodiments, the optical module may comprise a writeable memory to store instructions for the control unit. The control unit may comprise a programmable processor. Thus, the optical module may perform complex controlling tasks of the at least one network function according to computer programs stored in the writeable memory and according to the programming state of the processor. Further, the software stored in the writeable memory may be updated and changed according to instructions received via an electrical or optical interface of the optical module.

Therein, the instructions may be downloaded to the memory from a server, in particular via the optical interface upon power-on of the optical module. Thus, the control unit can be provided with instructions using existing communication channels. Further, the software stored in the memory may be automatically updated upon power-on of the optical module.

According to embodiments, the instructions may be loaded into the memory during production and/or during commissioning of the optical module. Thus, the control unit can be provided with control software, which may be updated later using further instructions received e.g. via the optical interface. Thus, complex control software may be loaded into the memory during production and/or commissioning without the need for a large download upon the first power-on of the optical module.

According to a further aspect, a network element is provided, comprising an optical module as described above. The network element further comprises an optical module interface for communication with the network element interface of the optical module, thus providing control access for the optical module to the at least one network element function. Further, the network element comprises at least one network element function module for providing the at least one network element function, wherein the at least one network element function is controlled by the control unit of the optical module. Thus, the network element function can be controlled by the optical module without the need for a separate hardware controller, thus reducing the overall cost and complexity of the network element.

According to embodiments, the at least one network element function may be selected from: mapping client signals onto line signals, operation, administration and maintenance (OAM), or protection. The network element function may provide e.g. a layer 2 LAN switch, such as an Ethernet switch. Alternatively, it may implement a DWDM Customer Premises Equipment (CPE), mapping client signals, e.g. Ethernet or SDH/Sonet, into DWDM line signals, e.g. according to ITU-T G.709, optionally performing in addition protection switching of client and/or line signals, supervision of client and/or line signals, and providing performance information of client and/or line signals. Several of these functions may be combined as network element functions of the network element.

According to embodiments, control data for controlling the at least one network element function may received by the optical module interface and may be forwarded to the network element function module. Thus, the network element function module may receive control data e.g. via a bus interface which may be configured according to I²C, SPI or SMBus. The control data may be used for controlling the operation of the network element function module or for configuring the network element function module.

The present description is mainly directed at embodiments of a device. However, it is to be understood, that any features described in terms of device features may also be implemented as method steps and vice versa.

### Detailed description

Various aspects are explained below in an exemplary manner with reference to the accompanying drawings, wherein:
Fig. 1 shows a control architecture according to an embodiment;
Fig. 2 shows an embodiment of an optical module; and
Fig. 3 shows a further embodiment of an optical module.

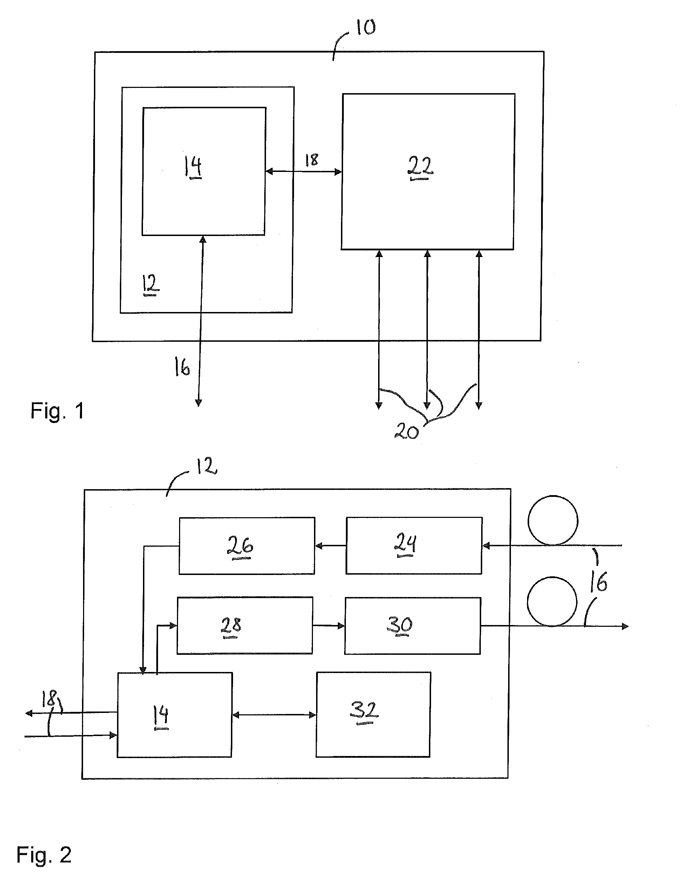

As shown in Fig. 1, a network element 10 according to an embodiment comprises an optical module 12, wherein the optical module may have the form factor of according to the SFP, SFP+, QSFP or XFP standard or a proprietary form factor. The optical module 12 comprises a control unit 14 which may be implemented as a CPU, e.g. an ARM core, or an FPGA or any other programmable entity.

The control unit 14 may be connected to an optical interface 16 for receiving control commands from and for providing feedback to an external entity. The optical interface 16 may be connected to a single mode or multi-mode optical fiber, in particular according to one of the SDH/SONET, Ethernet or Fibre Channel standards. The optical interface 16 may constitute a network management interface such as SNMP, CLI, TL1 etc. The physical implementation of the optical interface 16 may be e.g. a separate wavelength channel, specific Ethernet or serial interface etc.

Further, the control unit 14 may be connected to a network element interface 18 for transmitting control data for controlling at least one network element functionality 22. The network element functionality 22 may be implemented using at least one network element function module, such as e.g. optical transceiver modules, data processing modules or the like. The network element interface 18 may be an electrical interface to a device motherboard and may comprise a bus interface, such as e.g. a bus interface according to one of the I²C, SPI or SMBus standards. The network element interface 18 may be a bidirectional interface for passing control information from the control unit 14 to the network element functionality 22, and for passing operation, administration and maintenance (OAM) data, alarms, inventory information, etc. in the other direction. An implementation of the network element interface 18 may use existing interfaces of a known optical transceiver module (e.g. the I²C interface of an SFP, or the payload interface of an SFP, e.g. representing an Ethernet link), or the network element interface 18 may be implemented as an interface specific to this type of optical module.

The at least one network element functionality 22 may comprise e.g. mapping client signals onto line signals, OAM or protection functionalities, wherein Mechanisms are provided to switch to an alternate source of the traffic in case the original source is not available anymore. Examples of protection functionalities are 1+1 protection switching, where all information is sent via two disjoint channels to the other side. At this other side, the receiver decides which of the two copies of the signal is selected and forwarded. The 1+1 protection switching may be implemented according to any one of the SDH 1+1 MSP, SDH 1+1 SNCP, etc. standards.

The at least one network element functionality 22, which may be implemented as at least one network element function module, may be connected to at least one optical and/or electrical interface 20, which may comprise e.g. client interfaces or line interfaces and constitute external data and communication interfaces of the network element 10.

With the control of at least one network element function provided by the optical module 12, the network element 10 does not need to provide a separate controller hardware component. The network element functionality can remain unchanged compared to known network element architecture, as the optical module 12 can provide both the controlling as well as the external communication (via the optical interface 16) aspects of a prior art network element controller, without the need to provide an optical transceiver and a separate controller component. If the optical module uses a standardized form factor, such as e.g. SFP, SFP+, QSFP or XFP, then the optical module 12 can be inserted into an existing, standardized slot within any network element 10, thus freeing up any resources previously used for a separate controller component within the network element 10 and providing compatibility with existing architectures.

An SFP module is a compact, hot-pluggable and protocol-independent transceiver commonly used for both telecommunication and data communications applications. The form factor and electrical interface are specified by a multi-source agreement. An SFP module may interface a motherboard to a fiber optic or copper networking cable. SFP modules are commonly designed to support SDH/SONET, Gigabit Ethernet, Fibre Channel and other communications standards. Optical SFP modules may be adapted for interfacing multi-mode or single-mode optical fibers. The SFP module may contain a printed circuit board that may mate with electrical connectors in the network element.

Fig. 2 shows a schematic drawing of an optical module 12 according to an embodiment. Therein, incoming optical control commands via the optical interface 16 are detected by a suitable photodetector 24, such as e.g. a PINTIA element comprising a photo diode and a transimpedance amplifier. After passing an optional amplifier stage 26, the received control command is input to the control unit 14 and is used for controlling the operation of the network element functionality 22 (see Fig. 1) via the network element interface 18. Similarly, control feedback data generated by the control unit 14 is passed to a laser diode driver element 28 which then controls a laser diode 30 to output an optical signal via optical interface 16.

A memory 32 may be connected to the control unit 14, wherein the memory 32 may store instructions and computer programs for the control unit 14 in case the control unit 14 comprises a programmable microprocessor. The memory 32 may further store configuration data for the optical module 12 and/or for any further network element function module(s) of the network element.

An implementation of the optical interface 16 can be e.g. optical signal transported by an OSC (Optical Supervisory Channel), with a predetermined, standardized format, e.g. an STM-1 link or an Ethernet interface. Therein, the optical signal processing components as described above and the control unit 14 contain the necessary physical layer and link layer termination functions to extract/insert the related management interface protocol information from/into the received and transmitted optical signal.

In addition to control commands, the optical signal received via the optical interface 16 may comprise software which is then stored in the memory 32. Alternatively, software may be loaded into the memory 32 during production or commissioning of the optical module 12.

The network element interface 18 may be implemented by an I²C (inter-integrated circuit) interface, which is a serial data bus that is commonly used for internal communication between different components of a device. I²C uses two bidirectional open-drain lines, Serial Data Line (SDA) and Serial Clock (SCL), pulled up with resistors. The I²C reference design has a 7-bit or a 10-bit (depending on the device used) address space. The bus is a multi-master bus which means any number of master nodes can be present. Additionally, master and slave roles may be changed between messages (after a STOP is sent).

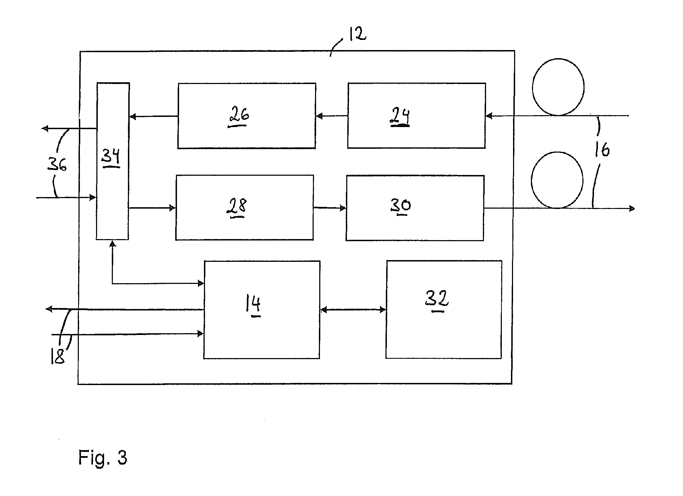

Fig. 3 shows a further embodiment of the optical module 12, wherein, in addition to the aspects described above, a configurable switch 34 is provided. Depending on the switch configuration, the optical module 12 may be operated in a transceiver mode and in a control mode. Therein, the switch may be configured by the control unit 14 using instructions stored in the memory 32 or received via an optical or electrical interface of the optical module. Thus, the switch 34 may be configured on connection of the optical module 12 to the motherboard or the backplane of the network element, or the switch 34 may be configured upon power-on of the optical module 12. Further, a mechanical switch may be provided on the surface of the optical module, so that a user may manually change the switch setting.

In the transceiver mode, optical signals received via the optical interface 16, are processed by the photodetector 24 and amplifier 26 and are passed on via an electrical data interface 36. The electrical data interface 36 may comprise differential receiver and transmitter channels and optionally further diagnostic channels, such as e.g. a transmitter fault indication. Similarly, electrical data signals received via the electrical data interface 36 are converted into optical signals using the laser diode driver element 28 and the laser diode 30 and are transmitted via the optical interface 16.

In the control mode, command signals received via the optical interface 16 are routed to the control unit 14 which generates control signals for controlling at least one network element function. The control signals may be passed to the network function element 22 (see Fig. 1) using the network element interface 18 as described above in conjunction with the embodiment of Fig. 2. Alternatively or in addition, the electrical data interface 36 may be used for communication between the control unit 14 and the network function element 22. Independent of which electrical interface of the optical module 12 is used, the control unit 14 may provide control of the network function element 22 as described above in conjunction with Fig. 1 and 2.

If a plurality of optical modules 12 are provided within a network element, all but one optical module 12 may be operated in transceiver mode, while one optical module 12 may be configured, using the configurable switch 34, to function as a controller for controlling the operation of the other optical modules 12 and possibly also controlling any further network function elements 22 provided within the network element 10. Alternatively, several, e.g. two, optical modules 12 may be operated to function as a controller, to provide redundancy for the optical interface 16, and/or the controller function 14.

As a possible modification, the configurable switch 34 may be provided with filter functionalities for filtering command signals received via the optical interface 16, e.g. on a separate wavelength channel, from data signals received simultaneously via the optical interface 16. Therein, the data signals may be routed to the electrical interface 36 as described above for the transceiver mode of the optical module 12, and the command signals may be passed to the control unit 14 for controlling the operation of the network function element 22. Thus, the optical module 12 according to this modification may function as a transceiver and as a control module simultaneously.

The various embodiments of the present device provide a controller architecture of a network element, wherein a single, or optionally several, optical module handles both the external control communication over an optical channel, such as e.g. an optical supervisory channel, as well as the controlling of at least one network element functionality. Thus, no separate hardware controller component is required. The use of standardized interfaces and of an optical module with a standardized form factor allows the implementation of the control architecture using existing network elements and/or network element functions. Communication between the optical module and between network function elements may be performed via standardized electrical interfaces that are present in known optical transceiver modules, such as e.g. standardized bus interfaces such as I²C or standardized electrical data interfaces.

In addition to optical interfaces and optical command signals, the architecture as described above may also be applied to electrical interfaces, e.g. Gigabit Ethernet modules that provide a 1000Base-T physical interface.

It should be noted that the description and drawings merely illustrate the principles of the proposed methods and devices. It will thus be appreciated that those skilled in the art will be able to devise various arrangements that, although not explicitly described or shown herein, embody the principles of the claimed subject-matter and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments, as well as specific examples, are intended to encompass equivalents thereof.

Finally, it should be noted that any block diagrams herein represent conceptual views of illustrative circuitry embodying the principles of the claimed subject-matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Optical module for a network element providing at least one network element function, comprising
an optical interface for receiving control commands for controlling operation of the network element over an optical communication link,
a network element interface for communication with the network element function, and
a control unit configured to control the at least one network element function provided by the network element via the network element interface.

2. Optical module of claim 1, wherein the network element interface comprises a bus interface for communication between the optical module and the network element function, in particular according to I²C, SPI or SMBus.

3. Optical module of claim 1 or 2, wherein the network element interface comprises ports for receiving and transmitting of control data for controlling the at least one network element function.

4. Optical module of any of claims 1 to 3, wherein the optical interface comprises means for terminating the optical communication link.

5. Optical module of claim 4, wherein the control unit receives control commands and sends responses via the optical interface and the optical communication link.

6. Optical module of any of claims 1 to 5, wherein the control unit is configured to process control commands according to a network management protocol, in particular SNMP or TL1.

7. Optical module of any of claims 1 to 6, wherein the optical module further comprises an optical transceiver connectable to the optical communication link using a single-mode or multi-mode fibre, in particular according to one of the following standards: SDH/SONET, Ethernet, Fibre Channel.

8. Optical module of claim 7, wherein the optical module further comprises a configurable switch, wherein, at a first switch setting, control commands received over the optical communication link are provided to the control unit, and, at a second switch setting, optical signals received over the optical communication link are converted into electrical signals and are transmitted via a data interface of the optical module to the network element.

9. Optical module of any of claims 1 to 8, wherein the optical communication link is configured to receive an optical network management signal, in particular via an optical supervisory channel.

10. Optical module of any of claims 1 to 9, implemented using a standardized form factor, in particular SFP, SFP+, QSFP, or XFP.

11. Optical module of any of claims 1 to 10, comprising a writeable memory to store instructions for the control unit, wherein the control unit comprises a programmable processor.

12. Optical module of claim 11, wherein the instructions are downloaded to the memory from a server, in particular via the optical interface upon power-on of the optical module.

13. Network element comprising
an optical module according to any one of claims 1 to 12,
an optical module interface for communication with the network element interface of the optical module,
at least one network element function module for providing the at least one network element function,
wherein the at least one network element function is controlled by the control unit of the optical module.

14. Network element of claim 13, wherein the at least one network element function is selected from mapping client signals onto line signals, OAM, protection.

15. Network element of claim 13 or 14, wherein control data for controlling the at least one network element function is received by the optical module interface and is forwarded to the network element function module.

## Amended claims

### Amended claims in accordance with Rule 137(2) EPC.

1. Optical module (12) for a network element (10), the network element (10) comprising at least one network element function module providing at least one network element function (22), the optical module (12) comprising
an optical interface (16) for receiving control commands for controlling operation of the network element (10) over an optical communication link,
a network element interface (18) for communication with the network element function (22), wherein the network element interface (18) comprises a bus interface for communication between the optical module and the network element function module, and
a control unit (14) configured to control the at least one network element function (22) provided by the network element function module via the network element interface (18).

2. Optical module (12) of claim 1, wherein the network element interface (18) is configured according to |²C, SP| or SMBus.

3. Optical module (12) of claim 1 or 2, wherein the network element interface (18) comprises ports for receiving and transmitting of control data for controlling the at least one network element function (22).

4. Optical module (12) of any of claims 1 to 3, wherein the optical interface (16) comprises means for terminating the optical communication link.

5. Optical module (12) of claim 4, wherein the control unit (14) receives control commands and sends responses via the optical interface (16) and the optical communication link.

6. Optical module (12) of any of claims 1 to 5, wherein the control unit (14) is configured to process control commands according to a network management protocol, in particular SNMP or TL1.

7. Optical module (12) of any of claims 1 to 6, wherein the optical module (12) further comprises an optical transceiver (24, 26, 28, 30) connectable to the optical communication link (16) using a single-mode or multi-mode fibre, in particular accordingto one of the following standards: SDH/SONET, Ethernet, Fibre Channel.

8. Optical module (12) of claim 7, wherein the optical module (12) further comprises a configurable switch (34), wherein, at a first switch setting, control commands received over the optical communication link (16) are provided to the control unit (14), and, at a second switch setting, optical signals received over the optical communication link (16) are converted into electrical signals and are transmitted via a data interface (36) of the optical module (12) to the network element (10).

9. Optical module (12) of any of claims 1 to 8, wherein the optical communication link (16) is configured to receive an optical network management signal, in particular via an optical supervisory channel.

10. Optical module (12) of any of claims 1 to 9, implemented using a form factor according to one of the SFP, SFP+, QSFP, or XFP standards.

11. Optical module (12) of any of claims 1 to 10, comprising a writeable memory (32) to store instructions for the control unit (14), wherein the control unit (14) comprises a programmable processor.

12. Optical module (12) of claim 11, wherein the instructions are downloaded to the memory (32) from a server, in particular via the optical interface (16) upon power-on of the optical module (16).

13. Network element (10) comprising
an optical module (12) according to any one of claims 1 to 12,
a module interface for communication with the network element interface (18) of the optical module (12),
at least one network element function module for providing the at least one network element function (22),
wherein the at least one network element function module is controlled by the control unit (14) of the optical module (12).

14. Network element (10) of claim 13, wherein the at least one network element function (22) is selected from mapping client signals onto line signals, OAM, protoction.

15. Network element (10) of claim 13 or 14, wherein control data for controlling the at least one network element function (22) is received by the module interface and is forwarded to the network element function module (22).
